# EUROPÄISCHE PATENTANMELDUNG

(11) **EP 1 632 705 A1**
(43) Veröffentlichungstag der Anmeldung: **08.03.2006**
(21) Anmeldenummer: 05107999.4
(22) Anmeldetag: 01.09.2005
(51) Int. Cl.: F16L 27/08, B08B 9/04, B05B 12/14

(54) **Drehbare und molchbare Leitungsverbindung**

(30) Priorität: 06.09.2004 DE 102004043013
(71) Anmelder: Dürr Systems GmbH, 70435 Stuttgart (DE)
(72) Erfinder: Martin, Herbert, 71384 Weinstadt (DE); Hering, Joachim, 88525 Dürmentingen (DE); Collmer, Andreas, 71665 Vaihingen/Enz (DE); Stiegler, Martin, 71711 Steinheim 2 (DE)
(74) Vertreter: Beier, Ralph

(57) **Zusammenfassung**

Die Erfindung betrifft eine Leitungsverbindung (1), insbesondere zur drehbaren Verbindung von zwei Leitungsabschnitten einer Farbleitung in einer mehrachsigen Lackiermaschine oder einem Lackierroboter, mit einem ersten Anschlussstück (2) zum Anschluss einer rohr- oder schlauchförmigen ersten Leitung und einem zweiten Anschlussstück (3) zum Anschluss einer schlauch- oder rohrförmigen zweiten Leitung, wobei das zweite Anschlussstück (3) dem ersten Anschlussstück (1) gegenüber liegt und gegenüber dem ersten Anschlussstück (1) verdrehbar ist, sowie mit einem durchgehenden Leitungskanal (11) zur Durchleitung eines Fluids. Es wird vorgeschlagen, dass der Leitungskanal (11) durchgehend molchbar ist.

## Beschreibung

Die Erfindung betrifft eine Leitungsverbindung, insbesondere zur drehbaren Verbindung von zwei Leitungsabschnitten einer Farbleitung in einer Lackiermaschine oder Lackierroboter, gemäß dem Oberbegriff des Anspruchs 1.

Bei modernen automatischen Lackieranlagen wird seit einiger Zeit die sogenannte Molchtechnik eingesetzt, um bei einem Farbwechsel die unvermeidbaren Farbwechselverluste zu minimieren. Hierbei wird ein als Molch bezeichneter beweglicher Dichtkörper mit der Farbe durch die Farbleitung gedrückt, wobei der Molch Dichtlippen aufweist, die an der Innenwand der Farbleitung anliegen und die Farbe aus der Farbleitung herausschiebt.

Zur Minimierung der Farbwechselverluste ist es wünschenswert, diese Molchtechnik nach Möglichkeit auf der gesamten Länge der Farbleitung bis zu dem Applikationsgerät (z.B. einem Rotationszerstäuber) einzusetzen. Dies wirft jedoch Probleme auf, wenn das Applikationsgerät von einer mehrachsigen Lackiermaschine (z.B. einem Lackierroboter) geführt wird, da die Farbleitung dann bei einer Bewegung der Lackiermaschine aufgrund der Drehbewegung der einzelnen Maschinenachsen relativ zueinander deformiert wird, was die Durchgängigkeit eines Molchs und damit die Molchbarkeit beeinträchtigen kann.

Zwar sind aus anderen Gebieten der Technik, wie beispielsweise bei der Kühlmittelzufuhr von Werkzeugmaschinen und der Hydraulikversorgung von Land- und Baumaschinen sogenannte Drehdurchführungen bekannt, die eine Weiterleitung eines flüssigen oder gasförmigen Mediums von einem fest stehenden Bauteil zu einem bewegten Bauteil ermöglichen, jedoch weisen diese bekannten Drehdurchführungen im Bereich der Dichtungen oder im Bereich des durchgehenden Leitungskanals konstruktionsbedingt sprunghafte Querschnittsveränderungen und Toträume auf, was eine Molchbarkeit ausschließt.

Der Erfindung liegt deshalb die Aufgabe zugrunde, auch in einer hochbeweglichen Lackiermaschine mit mehreren relativ zueinander drehbaren Maschinenachsen eine Molchbarkeit zu ermöglichen.

Diese Aufgabe wird, ausgehend von der vorstehend beschriebenen bekannten Drehdurchführung gemäß dem Oberbegriff des Anspruchs 1, durch die kennzeichnenden Merkmale des Anspruchs 1 gelöst.

Die Erfindung umfasst die allgemeine technische Lehre, in einem Lackierroboter mit mehreren relativ zueinander drehbaren Roboterhandachsen und einer durchgehenden Farbleitung mit jeweils mindestens einem Leitungsabschnitt in jeder Roboterhandachse eine drehbare und molchbare Leitungsverbindung einzusetzen, um die benachbarten Leitungsabschnitte in den einzelnen Roboterhandachsen miteinander zu verbinden. Dadurch wird die Molchbarkeit in dem Lackierroboter bis hin zu dem Applikationsgerät ermöglicht, wodurch die Farbwechselverluste minimiert werden.

Die Erfindung betrifft somit eine Leitungsverbindung mit einem ersten Anschlussstück zum Anschluss einer rohr- oder schlauchförmigen ersten Leitung und einem zweiten Anschluss zum Anschluss einer schlauch- oder rohrförmigen zweiten Leitung, wobei das zweite Anschlussstück dem ersten Anschluss gegenüber liegt und gegenüber dem ersten Anschlussstück verdrehbar ist.

Weiterhin weist die erfindungsgemäße Leitungsverbindung einen durchgehenden Leitungskanal zur Durchleitung eines fluiden Mediums auf, wobei der Leitungskanal erfindungsgemäß durchgehend molchbar ist.

Die durchgehende Molchbarkeit des Leitungskanals wird vorzugsweise dadurch erreicht, dass der Leitungskanal über seine gesamte Länge innerhalb der Leitungsverbindung totraumfrei und/oder absatzfrei ist und/oder einen im Wesentlichen konstanten Innenquerschnitt aufweist, der dem Außenquerschnitt eines Molchs entspricht und vorzugsweise zylindrisch ist.

Darüber hinaus weist der Leitungskanal vorzugsweise eine Innenwandung mit einer Rauhtiefe von weniger als 2 µm auf, wobei sich eine Rauhtiefe von maximal 1 µm als besonders vorteilhaft für die Molchbarkeit erwiesen hat. Die Erfindung ist jedoch hinsichtlich der Rautiefe der Innenwandung des durchgehenden Leitungskanals nicht auf diese Werte beschränkt, sondern auch mit anderen Rauhtiefen realisierbar, wobei beispielhaft Rauhtiefen von weniger als 3, 4, 5 oder 10 µm zu nennen sind.

Vorzugsweise dient die erfindungsgemäße Leitungsverbindung zur Durchleitung von Beschichtungsmittel (z.B. Farbe, Grundierung, Basislack oder Klarlack) in einer Beschichtungsanlage, jedoch ist die Erfindung hinsichtlich des durchzuleitenden Fluids nicht auf Beschichtungsmittel beschränkt, sondern grundsätzlich auch mit anderen Fluiden realisierbar.

Im Folgenden werden nun drei verschiedene alternative Varianten der Erfindung beschrieben, die unterschiedliche Vorteile und Nachteile aufweisen.

In einer Variante der Erfindung liegen die beiden Anschlussstücke der erfindungsgemäßen Leitungsverbindung an einer Stoßstelle des durchgehenden Leitungskanals direkt aneinander, so dass der Leitungskanal in der Leitungsverbindung nur einen einzigen Bauteilübergang aufweist. Bei einer Drehung der beiden Anschlussstücke relativ zueinander gleiten die beiden Anschlussstücke hierbei unmittelbar aufeinander, so dass die Anschlussstücke aus einem Material gefertigt sein müssen, das verschleißfest und reibungsarm ist, was die Fertigung verteuert. Vorteilhaft an dieser Variante der Erfindung mit nur einem einzigen Bauteilübergang innerhalb des durchgehenden Leitungskanals ist dagegen die minimale Belastung des Molchs beim Durchgang durch die erfindungsgemäße Leitungsverbindung, da nur ein einziger Bauteilübergang passiert werden muss.

In einer anderen Variante der Erfindung ist dagegen in dem Leitungskanal zwischen dem ersten Anschlussstück und dem zweiten Anschlussstück eine einzige Dichtung angeordnet, so dass der Leitungskanal in der Leitungsverbindung zwei Bauteilübergänge aufweist, nämlich einen ersten Bauteilübergang von dem einen Anschlussstück auf die Dichtung und einen zweiten Bauteilübergang von der Dichtung auf das andere Anschlussstück. Zusätzlich zu der Dichtung, die einen Bestandteil der Innenwandung des Leitungskanals bildet, können hierbei selbstverständlich weitere sekundäre Dichtungen vorgesehen sein, um die Leckagesicherheit zu erhöhen. Die beiden Anschlussstücke gleiten hierbei im Falle einer Drehbewegung also nicht unmittelbar aufeinander, sondern jeweils auf der dazwischen liegenden Dichtung. Dies bietet den Vorteil, dass die beiden Anschlussstücke aus einfacher zu bearbeitenden Materialien hergestellt werden können, was die Fertigungskosten senkt. Nachteilig an der Dichtung zwischen den beiden Anschlussstücken ist jedoch die Tatsache, dass ein Molch beim Durchgang zwei Bauteilübergänge passieren muss, nämlich zum einen den Bauteilübergang von dem einen Anschlussstück auf die Dichtung und zum anderen den Bauteilübergang von der Dichtung auf das andere Anschlussstück. Die größere Anzahl von Bauteilübergängen führt jedoch zu einer erhöhten mechanischen Belastung für den Molch.

In einer weiteren Variante der Erfindung sind dagegen in dem Leitungskanal zwischen dem ersten Anschlussstück und dem zweiten Anschlussstück zwei Dichtungen angeordnet, so dass der Leitungskanal in der Leitungsverbindung drei Bauteilübergänge aufweist. Auch hierbei gleiten die beiden Anschlussstücke also bei einer Relativbewegung nicht unmittelbar aufeinander, so dass diese aus einfach zu bearbeitenden Materialien hergestellt werden können, was zu günstigen Fertigungskosten beiträgt. Andererseits ist der Molch bei einer derartigen Leitungsverbindung mit drei Bauteilübergängen aufgrund der großen Anzahl von Bauteilübergängen einer entsprechend großen mechanischen Belastung unterworfen. Darüber hinaus müssen die einzelnen Dichtungen hierbei bezüglich der jeweiligen Anschlussstücke fixiert werden.

Bei den vorstehend beschriebenen Varianten der Erfindung mit einer Dichtung als Bestandteil des durchgehenden Leitungskanal ist die Reibungszahl (Haftreibungszahl und/oder Gleitreibungszahl) zwischen der Dichtung und dem ersten Anschlussstück und/oder zwischen der Dichtung und dem zweiten Anschlussstück vorzugsweise kleiner als die Reibungszahl zwischen den beiden Anschlussstücken, so dass die Hinzufügung der Dichtung zu einer Verringerung des durch das Verbindungselement verursachten Bremsmoments führt.

Es besteht hierbei jedoch auch die Möglichkeit, dass die Reibungszahl zwischen der Dichtung und dem ersten Anschlussstück und/oder zwischen der Dichtung und dem zweiten Anschlussstück größer ist als die Reibungszahl zwischen den beiden Anschlussstücken.

Weiterhin ist zu berücksichtigen, dass im Ruhezustand der erfindungsgemäßen Leitungsverbindung an den Dichtflächen zwischen den relativ zueinander drehbaren Teilen zunächst die Haftreibung wirkt, die vor Beginn der Drehung durch ein sogenannte Losbrechmoment überwunden werden muss. Während der Drehung der beiden Anschlussstücke wirkt dann an den Dichtflächen nur noch die geringere Gleitreibung. Es ist deshalb wünschenswert, das Losbrechmoment zu minimieren, damit die erfindungsgemäße Leitungsverbindung die Roboterbewegung möglichst wenig stört.

Zum einen lässt sich dies im Rahmen der Erfindung dadurch erreichen, dass die Dichtfläche möglichst klein ist, was jedoch zu einer entsprechend großen Flächenpressung an den Dichtflächen führt und damit an materialbedingte Grenzen stößt.

Zum anderen kann man das Losbrechmoment dadurch verringern, dass die auf Reibung belastete Dichtfläche möglichst nahe an der Drehachse angeordnet ist. Vorzugsweise grenzt die auf Reibung belastete Dichtfläche deshalb unmittelbar an den durchgehenden Leitungskanal an, wodurch das Drehmoment bei einer vorgegebenen axialen Verspannung minimal ist.

Vorzugsweise weist die erfindungsgemäße Leitungsverbindung eine Spannmutter und/oder eine Feder auf, um den Bauteilübergang bzw. die Bauteilübergänge axial mit einer Vorspannkraft zu verspannen. Die Vorspannkraft sollte hierbei so groß sein, dass auch bei axialen Zugkräften auf die angeschlossenen rohr- oder schlauchförmigen Leitungen die axiale Anpresskraft ausreicht, um eine befriedigende Dichtwirkung zu erreichen.

Bei der Feder zur axialen Verspannung der Bauteilübergänge kann es sich beispielsweise um eine Tellerfeder oder eine Spiralfeder handeln, jedoch ist die Erfindung nicht auf diese Federtypen beschränkt.

Weiterhin weist die erfindungsgemäße Leitungsverbindung vorzugsweise ein Gleitlager und/oder ein Wälzlager auf, um die beiden Anschlussstücke relativ zueinander drehbar zu lagern.

Hierbei kann das erste Anschlussstück ein Gehäuse aufweisen, während das zweite Anschlussstück eine Welle aufweist, wobei die Welle durch das Wälzlager bzw. das Gleitlager in dem Gehäuse drehbar gelagert ist. Das Gehäuse ist hierbei vorzugsweise topfförmig, einseitig offen und weist einen zylindrischen Innenquerschnitt auf. Hierbei liegt der Außenring des Wälzlagers bzw. der Wälzlager an der Innenwandung des topfförmigen Gehäuses an, während der Innenring des Wälzlagers oder der Wälzlager auf der in dem Gehäuse geführten Welle steckt, so dass das Gehäuse koaxial zu der Welle drehbar gelagert ist.

Vorzugsweise sind hierbei auf der Welle zwei Wälzlager angeordnet, wobei sich zwischen den beiden Wälzlagern die Feder befindet, welche die bereits vorstehend erwähnte axiale Vorspannkraft erzeugt. Der Innenring des einen Wälzlagers ist hierbei vorzugsweise an der Welle befestigt, während der Außenring des anderen Wälzlagers an dem Gehäuse befestigt ist, so dass sich die Feder einerseits an dem einen Wälzlager und andererseits an dem anderen Wälzlager abstützt.

Darüber hinaus ist in dem Gehäuse vorzugsweise eine den Bauteilübergang ringförmig umgebende Dichtungskammer vorgesehen, in der zusätzliche sekundäre Dichtungen angeordnet sein können, um die Leckageverluste zu minimieren.

Hierbei kann in die Dichtungskammer ein Spülanschluss münden, durch den die Dichtungskammer mit einem Spülmittel spülbar ist, um ein Festkleben der Dichtung durch eingedrungenes Medium (z.B. Farbe) zu verhindern.

Darüber hinaus kann in die Dichtungskammer auch ein Druckmessanschluss oder eine Leckagebohrung münden, um eine Leckageüberwachung zu ermöglichen.

Es besteht jedoch auch die Möglichkeit, dass die Dichtungskammer nach außen abgeschlossen ist, wobei in der Dichtungskammer ein Drucksensor angeordnet ist, was eine automatische Kontrolle ermöglicht. Der Drucksensor misst hierbei also den Druck in der Dichtungskammer und überträgt diesen an eine Auswertungseinheit.

Weiterhin kann die Dichtung zwischen den beiden Anschlussstücken eine innen liegende Primärdichtung und eine außen liegende, zusätzliche Sekundärdichtung aufweisen, wobei die Primärdichtung als Labyrinthdichtung ausgeführt sein kann. Die Sekundärdichtung besteht dagegen vorzugsweise aus einem elastischen und/oder thermoplastischen Material und/oder aus einem Elastomer.

Ferner kann der Leitungskanal an seiner Innenwand an dem Bauteilübergang bzw. an den Bauteilübergängen einseitig oder beidseitig eine Anlauffase aufweisen, um zu verhindern, dass der Molch beim Passieren des Bauteilübergangs hängen bleibt. Die Anlauffase ist hierbei gegenüber der ansonsten zylindrischen Innenwand um einen bestimmten Fasenwinkel angewinkelt, wobei der Fasenwinkel beispielsweise im Bereich zwischen 1° und 10° liegen kann. Hierbei sind beliebige Zwischenwerte innerhalb dieses Wertebereichs möglich und die Erfindung ist hinsichtlich des Fasenwinkels nicht auf diesen Wertebereich beschränkt.

Vorzugsweise bestehen das erste Anschlussstück und/oder das zweit Anschlussstück und/oder die Dichtung aus einem lackbeständigen und lösemittelbeständigen Material, um einen Einsatz in einer Beschichtungsanlage zu ermöglichen.

Der Anschluss der rohr- oder schlauchförmigen Leitungen an die beiden Anschlussstücke erfolgt vorzugsweise durch einen Schlauch-Schnellverbinder, wie er beispielsweise in DE 103 13 063 A1 und DE 102 33 862 A1 beschrieben ist. Der Inhalt dieser beiden Veröffentlichungen ist deshalb hinsichtlich der konstruktiven Gestaltung und der Funktionsweise eines solchen Schlauch-Schnellverbinders der vorliegenden Beschreibung in vollem Umfang zuzurechnen, so dass hier auf eine detaillierte Beschreibung eines Schlauch-Schnellverbinders verzichtet werden kann.

Weiterhin ist die Erfindung nicht auf den vorstehend beschriebenen Leitungsverbinder als einzelnes Bauteil beschränkt, sondern umfasst auch einen Lackierroboter oder allgemeiner eine Lackiermaschine mit einer Beschichtungsmittelleitung mit mehreren Leitungsabschnitten und einer zwischen benachbarten Leitungsabschnitten angeordneten Leitungsverbindung der vorstehend beschriebenen Art.

Vorzugsweise sind die einzelnen Leitungsabschnitte des Lackierroboters bzw. der Lackiermaschine hierbei den einzelnen Roboterhandachsen bzw. Maschinenachsen zugeordnet, die relativ zueinander drehbar sind, wobei die erfindungsgemäße drehbare Leitungsverbindung die benachbarten Leitungsabschnitte drehbar miteinander verbindet.

Ferner umfasst die Erfindung auch die neuartige Verwendung einer solchen Leitungsverbindung zur Verbindung von zwei benachbarten Leitungsabschnitten einer Beschichtungsmittelleitung in einem Lackierroboter bzw. einer Lackiermaschine.

Schließlich ist noch zu erwähnen, dass der in der vorliegenden Beschreibung verwendete Begriff eines Lackierroboters allgemein zu verstehen ist und nicht auf Roboter im engeren Sinne beschränkt ist. Vielmehr umfasst der Begriff eines Lackierroboters im Sinne der Erfindung auch allgemein automatisierte Lackiermaschinen oder Lackiervorrichtungen.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figur näher erläutert, die ein bevorzugtes Ausführungsbeispiel der Erfindung zeigt.

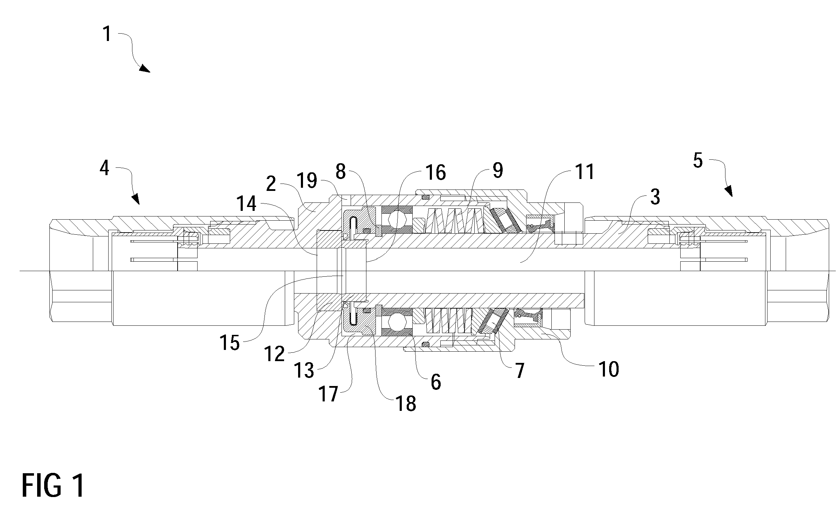

Figur 1 zeigt eine Querschnittsansicht einer erfindungsgemäßen Leitungsverbindung 1, die in einem mehrachsigen Lackierroboter mit mehreren Handachsen eingesetzt werden kann, um verschiedene Leitungsabschnitte einer Farbleitung in den einzelnen Roboterhandachsen drehbar und molchbar miteinander zu verbinden.

Hierzu weist die Leitungsverbindung ein einseitig offenes, topfförmiges Gehäuse 2 mit einem zylindrischen Innenquerschnitt und eine zylindrische Welle 3 auf, die in dem Gehäuse 2 koaxial drehbar gelagert ist, wobei das Gehäuse 2 und die Welle 3 jeweils ein Anschlussstück zum Anschluss eines Leitungsabschnitts eines Farbschlauchs des Lackierroboters bilden.

Der Anschluss der Leitungsabschnitte an das Gehäuse 2 bzw. die Welle 3 erfolgt hierbei durch einen Schlauch-Schnellverbinder 4 bzw. 5, der detailliert in DE 103 13 063 A1 sowie in DE 102 33 862 A1 beschrieben ist, so dass der Inhalt dieser Veröffentlichungen der vorliegenden Beschreibung hinsichtlich des Aufbaus und der Funktionsweise des Schlauch- Schnellverbinders 4 bzw. 5 in vollem Umfang zuzurechnen ist.

Die Lagerung der Welle 3 in dem Gehäuse 2 erfolgt durch zwei Kugellager 6, 7 mit jeweils einem Innenring und einem Außenring, wobei der Außenring der beiden Kugellager 6, 7 an der Innenwandung des topfförmigen Gehäuses 2 anliegt, während der Innenring der beiden Kugellager 6, 7 auf der äußeren Mantelfläche der Welle 3 aufsitzt.

Das gehäuseseitige Kugellager 6 wird hierbei auf der Welle 3 durch einen Sprengring 8 axial einseitig fixiert.

Weiterhin ist zwischen den beiden Kugellagern 6, 7 eine Tellerfeder 9 angeordnet, welche die beiden Kugellager 6, 7 axial auseinander drückt.

Auf der der Tellerfeder 9 abgewandten Seite stützt sich das Kugellager 7 an einer Spannmutter 10 ab, die mit ihrem Außengewinde in ein entsprechend angepasstes Innengewinde an der Mündungsöffnung des Gehäuses 2 eingeschraubt ist.

In dem Gehäuse 2 befindet sich hierbei eine Durchgangsbohrung, die mit der Welle 3 fluchtet und einen durchgehenden Leitungskanal 11 bildet, wobei der Leitungskanal 11 molchbar ist. Hierzu ist der Leitungskanal 11 totraumfrei, absatzfrei und weist über seine gesamte Länge einen konstanten Innenquerschnitt auf, der dem Außenquerschnitt eines zu verwendenden Molchs entspricht, wobei der Molch herkömmlich ausgebildet sein kann und zur Vereinfachung nicht dargestellt ist.

Das Gehäuse 2 stößt hierbei jedoch nicht direkt mit der relativ zu dem Gehäuse 2 verdrehbaren Welle 3 zusammen. Vielmehr sind zwischen dem Gehäuse 2 und der Welle 3 zwei ringförmige Dichtungen 12, 13 angeordnet, die denselben Innenquerschnitt aufweisen wie der Leitungskanal 11 und einen Teil der Innenwandung des Leitungskanals 11 bilden. An den Stoßstellen zwischen dem Gehäuse 2, den beiden Dichtungen 12, 13 und der Welle 3 bilden sich hierbei drei Bauteilübergänge 14-16, wobei die einzelnen Bauteilübergänge 14-16 jeweils beidseitig eine Anlauffase aufweisen, um ein Festhängen eines durchgehenden Molchs zu verhindern.

Die einzelnen Bauteilübergänge 14-16 werden hierbei durch die Tellerfeder 9 in Verbindung mit der Spannmutter 10 in axialer Richtung vorgespannt, um eine ausreichende Dichtwirkung zu erzielen. Die axiale Vorspannkraft ist hierbei hinreichend groß, um auch bei einer axialen Zugbelastung auf die mittels der Schlauch-Schnellverbinder 4, 5 angeschlossenen Leitungsabschnitte eine ausreichende Dichtkraft zu erhalten. Bei einem Einschrauben der Spannmutter 10 in das Gehäuse 2 wird das Kugellager 7 in axialer Richtung gegen das Kugellager 6 geschoben, wodurch sich die Spannung der Tellerfeder 9 erhöht. Diese Spannung der Tellerfeder 9 wird über das Kugellager 6 und den Sprengring 8 auf die Welle 3 übertragen und wirkt somit auf die Bauteilübergänge 14-16, die dadurch axial verspannt werden.

Die Bauteilübergänge 15, 16 umgibt hierbei eine ringförmige Dichtungskammer 17, in der eine Sekundärdichtung 18 angeordnet ist, um Leckageverluste zu minimieren.

In die Dichtungskammer 17 mündet hierbei eine Leckagebohrung 19, die eine optische Kontrolle ermöglicht.

Es besteht jedoch auch die Möglichkeit, dass an die Leckagebohrung 19 ein Drucksensor angeschlossen wird, um eine automatische Leckageüberwachung zu ermöglichen.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Leitungsverbindung (1), insbesondere zur drehbaren Verbindung von zwei Leitungsabschnitten einer Farbleitung in einem Lackierroboter oder einer Lackiermaschine, mit
- einem ersten Anschlussstück (2) zum Anschluss einer rohr- oder schlauchförmigen ersten Leitung,
- einem zweiten Anschlussstück (3) zum Anschluss einer schlauch- oder rohrförmigen zweiten Leitung, wobei das zweite Anschlussstück (3) dem ersten Anschlussstück (1) gegenüber liegt und gegenüber dem ersten Anschlussstück (1) verdrehbar ist, sowie mit
- einem durchgehenden Leitungskanal (11) zur Durchleitung eines Fluids,
**dadurch gekennzeichnet,**
**dass** der Leitungskanal (11) durchgehend molchbar ist.

2. Leitungsverbindung nach Anspruch 1, **dadurch gekennzeichnet, dass** das erste Anschlussstück und das zweite Anschlussstück an einer Stoßstelle direkt aneinander anliegen, so dass der Leitungskanal in der Leitungsverbindung nur einen einzigen Bauteilübergang aufweist.

3. Leitungsverbindung nach Anspruch 1, **dadurch gekennzeichnet, dass** in dem Leitungskanal zwischen dem ersten Anschlussstück und dem zweiten Anschlussstück eine einzige Dichtung angeordnet ist, so dass der Leitungskanal in der Leitungsverbindung zwei Bauteilübergänge aufweist.

4. Leitungsverbindung (1) nach Anspruch 1, **dadurch gekennzeichnet, dass** in dem Leitungskanal (11) zwischen dem ersten Anschlussstück (2) und dem zweiten Anschlussstück (3) zwei Dichtungen (12, 13) angeordnet sind, so dass der Leitungskanal (11) in der Leitungsverbindung (1) drei Bauteilübergänge (14-16) aufweist.

5. Leitungsverbindung (1) nach einem der vorhergehenden Ansprüche, **gekennzeichnet durch** eine Spannmutter (10) und/oder eine Feder (9), welche den Bauteilübergang oder die Bauteilübergänge (14-16) mit einer Vorspannkraft axial verspannt.

6. Leitungsverbindung (1) nach einem der vorhergehenden Ansprüche, **gekennzeichnet durch** ein Gleitlager und/oder ein Wälzlager (6, 7) zur drehbaren Lagerung des ersten Anschlussstücks (2) relativ zu dem zweiten Anschlussstück (3).

7. Leitungsverbindung (1) nach Anspruch 6, **dadurch gekennzeichnet, dass** das erste Anschlussstück (2) ein Gehäuse aufweist, während das zweite Anschlussstück (3) eine Welle aufweist, wobei die Welle (3) durch das Wälzlager (6, 7) in dem Gehäuse (2) drehbar gelagert ist.

8. Leitungsverbindung (1) nach Anspruch 7, **dadurch gekennzeichnet, dass** die Feder (9) in axialer Richtung zwischen zwei Wälzlagern (6, 7) auf der Welle (3) angeordnet ist.

9. Leitungsverbindung (1) nach einem der Ansprüche 7 bis 8, **dadurch gekennzeichnet, dass** das Gehäuse (2) eine den Bauteilübergang (15, 16) ringförmig umgebende Dichtungskammer (17) aufweist, wobei in die Dichtungskammer (17) ein Spülanschluss mündet, durch den die Dichtungskammer (17) spülbar ist.

10. Leitungsverbindung (1) nach einem der vorhergehenden Ansprüche, **dadurch gekennzeichnet, dass** das Gehäuse (2) eine den Bauteilübergang (15, 16) ringförmig umgebende Dichtungskammer (17) aufweist, wobei in die Dichtungskammer (17) ein Druckmessanschluss oder eine Leckagebohrung (19) mündet oder in der Dichtungskammer (17) ein Drucksensor angeordnet ist.

11. Leitungsverbindung (1) nach einem der vorhergehenden Ansprüche, **dadurch gekennzeichnet, dass** die Dichtung (12, 13, 18) eine innen liegende Primärdichtung (12, 13) und eine außen liegende, zusätzliche Sekundärdichtung (18) aufweist.

12. Leitungsverbindung (1) nach Anspruch 11, **dadurch gekennzeichnet, dass** die Primärdichtung (12, 13) eine Labyrinthdichtung aufweist.

13. Leitungsverbindung (1) nach Anspruch 11 oder 12, **dadurch gekennzeichnet, dass** die Sekundärdichtung (18) aus einem elastischen und/oder thermoplastischen Material und/oder aus einem Elastomer besteht.

14. Leitungsverbindung (1) nach einem der vorhergehenden Ansprüche, **dadurch gekennzeichnet, dass** der Leitungskanal (11) an seiner Innenwand an dem Bauteilübergang (15) einseitig oder beidseitig eine Anlauffase aufweist.

15. Leitungsverbindung (1) nach einem der vorhergehenden Ansprüche, **dadurch gekennzeichnet, dass** das erste Anschlussstück (2) und/oder das zweite Anschlussstück (3) und/oder die Dichtung (12, 13, 18) aus einem lackbeständigen und lösemittelbeständigen Material bestehen.

16. Leitungsverbindung (1) nach einem der vorhergehenden Ansprüche, **dadurch gekennzeichnet, dass** der Leitungskanal (11) über seine gesamte Länge totraumfrei und/oder absatzfrei ist und/oder einen im Wesentlichen konstanten Innenquerschnitt und/oder eine Innenwandung mit einer Rauhtiefe von weniger als 1, 2, 5 oder 10 µm aufweist.

17. Lackiermaschine, insbesondere mehrachsiger Lackierroboter, mit einer Beschichtungsmittelleitung mit mehreren Leitungsabschnitten und einer zwischen benachbarten Leitungsabschnitten angeordneten und diese miteinander verbindenden Leitungsverbindung (1) nach einem der vorhergehenden Ansprüche.

18. Verwendung einer Leitungsverbindung (1) nach einem der Ansprüche 1 bis 16 zur Verbindung von zwei benachbarten Leitungsabschnitten einer Beschichtungsmittelleitung in einer Lackiermaschine, insbesondere in einem mehrachsigen Lackierroboter.
